# EUROPÄISCHE PATENTANMELDUNG

(11) **EP 2 500 158 A2**
(43) Veröffentlichungstag der Anmeldung: **19.09.2012**
(21) Anmeldenummer: 12001161.4
(22) Anmeldetag: 22.02.2012
(51) Int. Cl.: B29C 45/18, B29K 21/00

(54) **Plastifizier- und Einspritzaggregat**

(30) Priorität: 03.03.2011 DE 102011012947
(71) Anmelder: Klöckner Desma Elastomertechnik GmbH, 78567 Fridingen (DE)
(72) Erfinder: Krell, Volker, 78579 Neuhausen (DE)
(74) Vertreter: Röther, Peter

(57) **Zusammenfassung**

Die Erfindung betrifft ein Plastifizier- und Einspritzaggregat für Gummi-Spritzgießmaschinen mit einer in einem Plastifizierzylinder mittels eines Antriebs drehbar gelagerten Schnecke, an deren antriebsseitigem Ende eine Zuführvorrichtung für den noch unvulkanisierten Kautschukstrang angeordnet ist, das dadurch gekennzeichnet ist, dass die Zuführvorrichtung eine in konstantem Abstand zur und seitlich neben der Schnecke angeordnete rotierbare Fütterwalze vorsieht, die über einen eigenen Antrieb verfügt, der über ein Getriebe die Fütterwalze bewegt, wobei Schnecke und Fütterwalze achsparallel zueinander angeordnet und ihre Drehrichtungen entgegengesetzt sind.

## Beschreibung

Die Erfindung betrifft ein Plastifizier- und Einspritzaggregat für Gummi-Spritzgießmaschinen mit einer in einem Plastifizierzylinder mittels eines Antriebs drehbar gelagerten Schnecke, an deren antriebsseitigem Ende eine Zuführvorrichtung für den noch unvulkanisierten Kautschukstrang angeordnet worden ist.

Der Kautschukstrang wird durch die Zuführvorrichtung in den Schneckengang eingeleitet und im Plastifizierzylinder bis zu dessen Düse plastifiziert. Sobald eine ausreichende Menge plastifizierten Materials im Plastifizierzylinder vorhanden ist, wird das plastifizierte Material (entweder durch einen Kolben oder durch die Plastifizierschnecke selbst durch das Düsenmundstück in die Formkavität der Spritzgießmaschine eingespritzt.

Der Erfindung liegt die Aufgabe zugrunde, eine Zuführvorrichtung anzugeben, die den zugeführten unvulkanisierten Kautschukstrang vergleichmäßigt und definiert in den Schneckengang am antriebsseitigen Ende der Plastifizierschnecke einführt.

Die Erfindung löst diese Aufgabe gemäß dem kennzeichnenden Teil des Anspruchs 1 dadurch, dass die Zuführvorrichtung eine in konstantem Abstand zur und seitlich neben der Schnecke angeordnete rotierbare Fütterwalze vorsieht, die über einen eigenen Antrieb verfügt, der über ein Getriebe die Fütterwalze bewegt, wobei Schnecke und Fütterwalze achsparallel zueinander angeordnet und ihre Drehrichtungen entgegengesetzt sind.

Der Einsatz einer Fütterwalze an sich ist zwar bereits aus der Extrusionstechnik bekannt. Bei dieser Anwendung ist die Fütterwalze in der Regel rotationsmäßig mit der Extrusionsschneckenbewegung synchronisiert, hat also keinen eigenen Antrieb, sondern ist über ein Zahnrad mit dem Schneckenantrieb verbunden. Nachteil hierbei sind ungünstige seitliche Kräfte auf die Schnecke durch die Fütterwalze. Darüber hinaus kann es zu Klumpenbildung in diesem Bereich kommen.

Die Antriebe von Plastifizierschnecke und Fütterwalze gemäß der Erfindung sind voneinander getrennt, so dass es zu diesen seitlichen ungünstigen Kräften nicht kommen kann.

Somit ist die Verwendung einer derartigen Fütterwalze beim Spritzgießen neu.

Die Fütterwalzenoberfläche liegt dabei fast an der Einhüllenden der Plastifizierschnecke an.

Durch diesen konstanten Abstand ist ein definierter Raum zwischen Fütterwalzenoberfläche und Schneckengang gegeben. Unabhängig von der Dicke des zugeführten Kautschukstrangs drückt die Fütterwalze somit jeweils konstante Mengen in die Plastifizierschnecke hinein.

Als geeigneten Antrieb der Fütterwalze wird gemäß Anspruch 2 ein Hydromotor angegeben, was jedoch nur beispielhaft gemeint ist.

Zwischen Hydromotor und Fütterwalze ist gemäß Anspruch 3 ebenfalls beispielsweise ein Zahnradgetriebe angeordnet.

Die Erfindung wird im folgenden anhand von Zeichnungen dargestellt und erläutert.

Es zeigen:
- Figur 1: in seitlich schräger Perspektive eine Zuführeinrichtung
- Figur 2: Zuführeinrichtung gemäß Figur 1 in Vorderansicht
- Figur 3: Darstellung gemäß Figur 2 mit in den Schneckengang eingeführtem Kautschukstrang
- Figur 4: Darstellung gemäß Figur 2 oder 3 mit dickerem Kautschukstrang

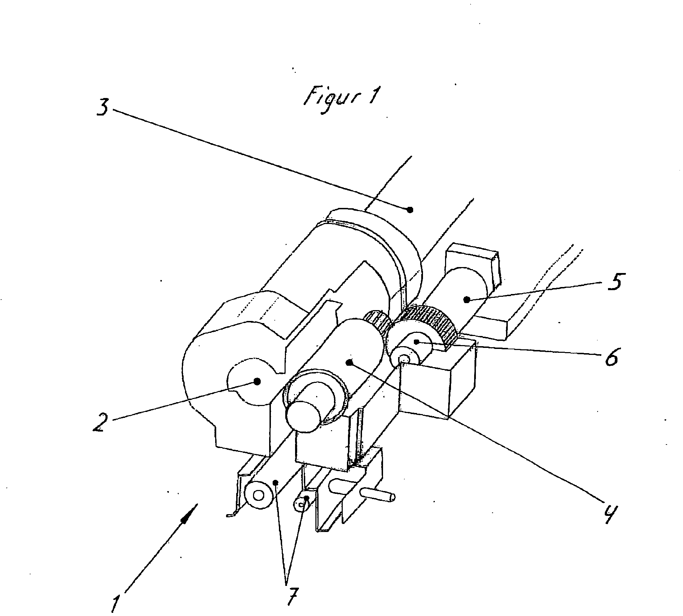

In der Figur 1 ist eine Zuführeinrichtung für einen Kautschukstrang in den Schneckengang eines Plastifizier- und Einspritzaggregats einer Gummi-Spritzgießmaschine dargestellt und allgemein mit dem Bezugszeichen 1 versehen. Aus Übersichtlichkeitsgründen ist der Antriebskomplex für die mit dem Bezugszeichen 2 versehene Plastifizierschnecke weggelassen.

Die Plastifizierschnecke 2 ist drehbar in einem Plastifizierzylinder 3 angeordnet.

Seitlich neben dem antriebsseitigen Ende der Plastifizierschnecke ist eine Fütterwalze 4 achsparallel zur Plastifzierschnecke 2 angeordnet. Die Fütterwalze 4 ist in konstantem Abstand neben der Plastifzierschnecke 2 angeordnet und zwar derart, dass die Oberfläche der Fütterwalze 4 die Einhüllende der Plastifizierschnecke 2 beinahe berührt.

Angetrieben wird die Fütterwalze 4 von einem Hydromotor 5, der über ein Zahnradgetriebe 6 mit der Fütterwalze 4 verbunden ist.

Mit dem Bezugszeichen 7 ist ein Führungswalzenpaar für die Zuleitung des Kautschukstranges zur Fütterwalze bezeichnet.

Die Walzen 7 sind abstandsveränderlich zueinander angeordnet, um der Tatsache Rechnung zu tragen, dass der zugeführte Kautschukstrang nicht immer die gleiche Dicke aufweist.

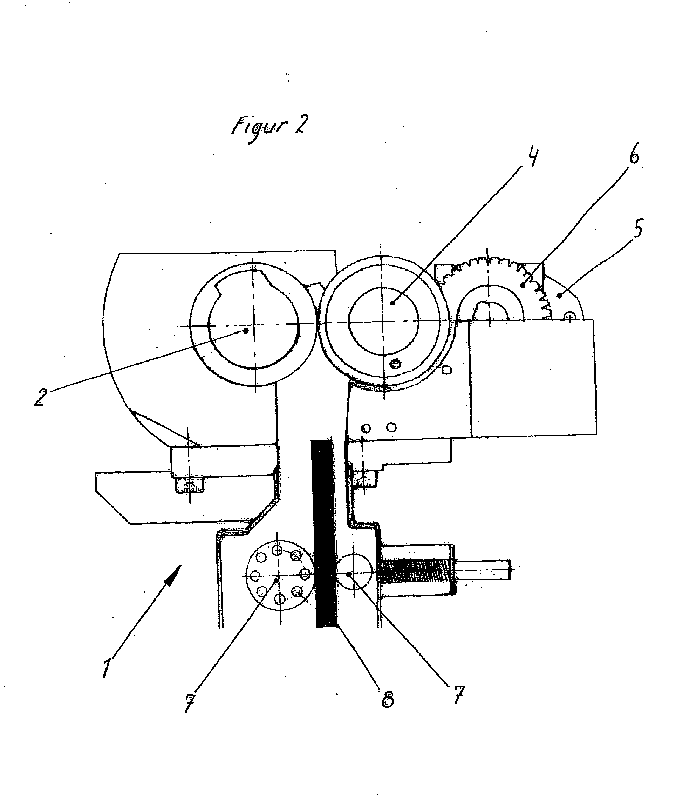

In der Figur 2 ist in Vorderansicht die Zuführvorrichtung 1 dargestellt. Aus dieser Figur geht die seitliche Anordnung von Plastifizierschnecke 2 und Fütterwalze 4 deutlich hervor. Durch die Walzen 7 wird ein noch unvulkanisierter Kautschukstrang 8 in Richtung Fütterwalze geführt.

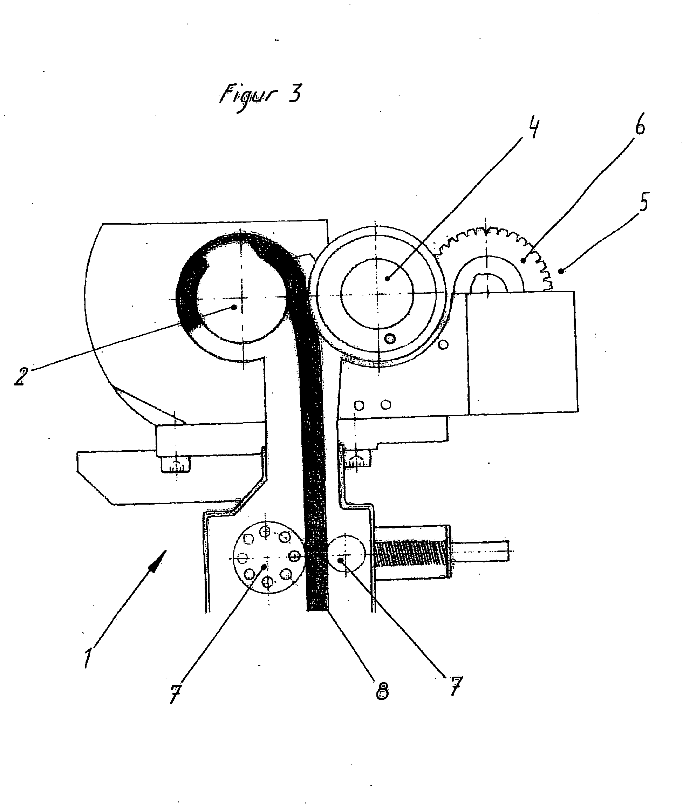

In der Figur 3 ist der Zustand dargestellt, in dem der Kautschukstrang 8 von der Fütterwalze bereits in den Schneckengang eingedrückt worden ist.

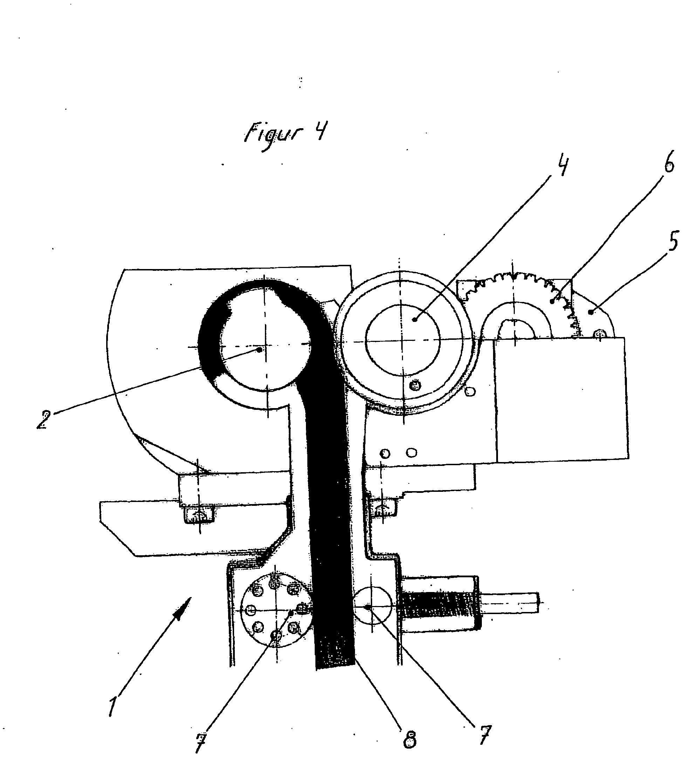

Schließlich ist in Figur 4 dargestellt, wie durch die Fütterwalze 4 auch ein wesentlich breiterer Kautschukstrang 8 vergleichmäßigt in den Schneckengang eingedrückt wird.

## Patentansprüche

1. Plastifizier- und Einspritzaggregat für Gummi-Spritzgießmaschinen mit einer in einem Plastifizierzylinder mittels eines Antriebs drehbar gelagerten Schnecke, an deren antriebsseitigem Ende eine Zuführvorrichtung für den noch unvulkanisierten Kautschukstrang angeordnet ist,
**dadurch gekennzeichnet,**
**dass** die Zuführvorrichtung (1) eine in konstantem Abstand zur und seitlich neben der Schnecke (2) angeordnete rotierbare Fütterwalze (4) vorsieht, die über einen eigenen Antrieb (5) verfügt, der über ein Getriebe (6) die Fütterwalze (4) bewegt, wobei Schnecke (2) und Fütterwalze (4) achsparallel zueinander angeordnet und ihre Drehrichtungen entgegengesetzt sind.

2. Plastifizier- und Einspritzaggregat nach Anspruch 1,
**dadurch gekennzeichnet,**
**dass** der Antrieb (5) der Fütterwalze (4) ein Hydromotor ist.

3. Plastifizier- und Einspritzaggregat nach Anspruch 1 oder 2,
**dadurch gekennzeichnet,**
**dass** das Getriebe (6) ein Zahnradgetriebe ist.

4. Verwendung einer Zuführvorrichtung (1) nach einem der Ansprüche 1 bis 3, mit einer Gummispritzgießmaschine zum taktweisen Spritzen technischer Gummiartikel.
